# EUROPEAN PATENT SPECIFICATION

(11) **EP 2 123 453 B1**
(45) Date of publication and mention of the grant of the patent: **16.10.2013**
(21) Application number: 09156847.7
(22) Date of filing: 31.03.2009
(51) Int. Cl.: B32B 37/12, B32B 37/00, B05C 1/08, B27N 7/00

(54) **Machine for applying panel coatings**
Maschine zur Aufbringung von Beschichtungen auf einem Paneel
Machine pour appliquer des revêtements sur des panneaux

(30) Priority: 23.05.2008 ES 200801513
(43) Date of publication of application: 25.11.2009
(73) Proprietor: BARBERAN LATORRE, Jesus Francisco, 08860 Castelldefels Barcelona (ES)
(72) Inventor: BARBERAN LATORRE, Jesus Francisco, 08860 Castelldefels Barcelona (ES)
(74) Representative: Evens, Paul Jonathan

(56) References cited:
- DE-A1-102004 036 538
- DE-C1- 10 123 521

## Description

### Field of the Art

The present invention relates to machines which are used in the furniture industry and the like to apply panel coatings, such panels being made of wood, fiberboard or other materials, proposing a machine which can used for any type of coating, improving the conditions of said application.

### State of the Art

Different systems depending on the coating to the applied and on the part to be coated are currently used to apply coatings both in panels and in moldings, out of the different materials existing on the market, this type of coating being applied in a particular process line e.g. DE-A-101 23 521.

A coating system is known in such sense which applies a layer of glue or adhesive on the panel to be coated by means of a metering roller and another applicator roller, a coating sheet later being incorporated on the glued panel such that, by means of a subsequent calendering of the assembly, the coating sheet is uniformly fixed on the base panel.

Another known coating system applies a layer of glue on the sheet intended for the coating by means of an applicator roller and a metering roller, or by means of an applicator roller, a metering roller and a regulating roller, the glued sheet later being incorporated on the panel to be coated to uniformly fix the sheet on the base panel by means of a subsequent calendering.

Said coating systems with gluing by means of a head with rollers have the drawback that the dimension of the rollers limits the width of the application, a system for applying the glue by means of a head with a lip having been developed to overcome this drawback.

In any case, said known coating systems are applied in independent process lines specifically designed for each type of coating, such that an independent process line is required for the application of each system, with the drawbacks of space and cost that the multiple machines involve.

### Object of the Invention

According to the invention, a machine for applying coatings is proposed, provided with a structural assembly providing very advantageous functional features since it confers a versatility which allows developing different coating systems with the same machine, without needing independent process lines.

The proposed machine incorporates rollers making up a glue applicator head, said head being able to be positioned to apply glue directly on a panel which is moved through the machine or on a coating sheet which is supplied from an unwinding device, a mobile roller furthermore being arranged which can be combined with the above as a regulator for the application transfer of the glue on the coating sheet, as well as an also mobile head with a lip, which can in turn be positioned to replace the head with rollers in the application of glue on the coating sheet, the assembly for applying glue being in front of the two calendering rollers for passing the application panel with the coating sheet incorporated through said calendering, independently of the application of the gluing for fixing the sheet on the panel.

Thus, a coating system with the application of the fixing glue on the panel to be coated by means of a head formed by an applicator roller and a metering roller, to incorporate the coating sheet on the glued panel, the assembly later passing through the calendering rollers, can be made with the machine.

A coating system with the application of the fixing glue on the coating sheet by means of the same head formed by the applicator roller and the metering roller, to incorporate the glued sheet on the panel to be coated, the assembly later passing through the same calendering rollers, can likewise be made with the same machine. The glue can be applied, in this case, directly on the coating sheet by means of the applicator head or by means of transfer, placing the regulating roller between the applicator head and the coating sheet.

And a coating system with the application of the fixing glue on the coating sheet by means of the head with a lip, with the possibility of carrying out the application in variable widths, can likewise be made with the same machine.

The machine is provided with two unwinding devices to supply the coating sheet, the sheet being able to be supplied from any of the unwinding devices depending on the gluing system used for the coating to be applied.

### Description of the Drawings

Figure 1 is a side elevational view of the proposed machine with the complete equipment for the different gluing systems for the application coating.
Figure 2 is a side elevational view of the machine in the arrangement of the system for applying glue on the panel to be coated.
Figure 3 is a diagram of said system for applying glue on the panel to be coated according to the arrangement of the previous figure.
Figure 4 is a side elevational view of the machine in the arrangement of the system for applying glue directly on the coating sheet by means of the head with rollers.
Figure 5 is a diagram of said system for applying glue on the coating sheet according to the arrangement of the previous figure.
Figure 6 is a side elevational view of the machine in the arrangement of the system for applying glue on the coating sheet by means of transfer from the head with rollers with the regulating roller.
Figure 7 is a diagram of said system for applying glue by transfer on the coating sheet according to the arrangement of the previous figure.
Figure 8 is a side elevational view of the machine in the arrangement of the system for applying glue on the coating sheet by means of the head with a lip.
Figure 9 is a diagram of said system for applying glue on the coating sheet by means of the head with a lip according to the arrangement of the previous figure.

### Detailed Description of the Invention

The object of the invention relates to a machine for applying coatings on moldings or panels by means of incorporating a sheet which is fixed by sticking with glue and applying pressure, said machine being provided with equipment which allows making different systems for applying glue for fixing the coating, being a highly versatile machine.

The proposed machine consists of a feeding conveyance (1), whereby the panel (2) to be coated is introduced, until a meeting point with the coating sheet (3), for the joined assembly to pass through calendering rollers (4) and exit through a discharging conveyance (5); the coating sheet (3) being supplied from an unwinding device (6.1) placed at the front part of the machine or from an unwinding device (6.2) placed at the rear part.

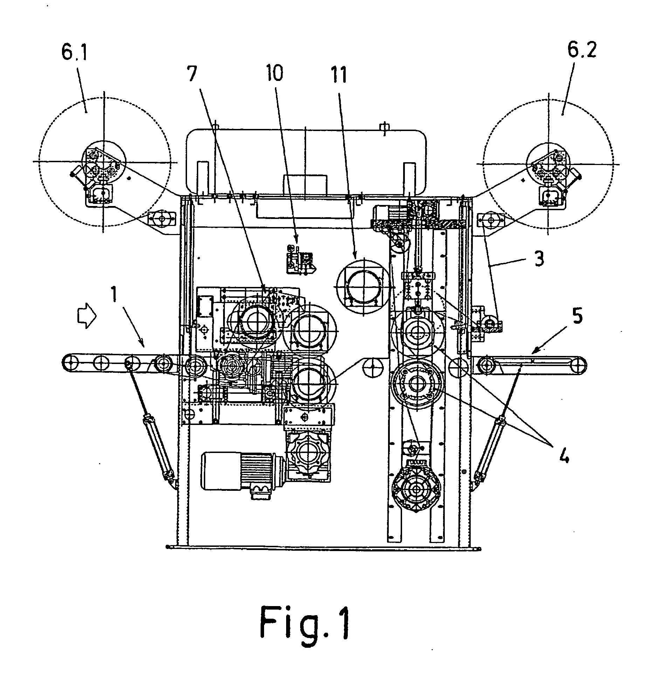

As shown in Figure 1, prior to passing through the calendering rollers (4), the machine includes a gluing area, in which there is a head (7) with rollers, formed by a metering roller (8) and an applicator roller (9), a head (10) with a lip and a transfer roller (11), the head (7) with rollers, the head (10) with a lip and the transfer roller (11) being arranged in a mobile assembly which allows moving them individually to place them in work and rest positions.

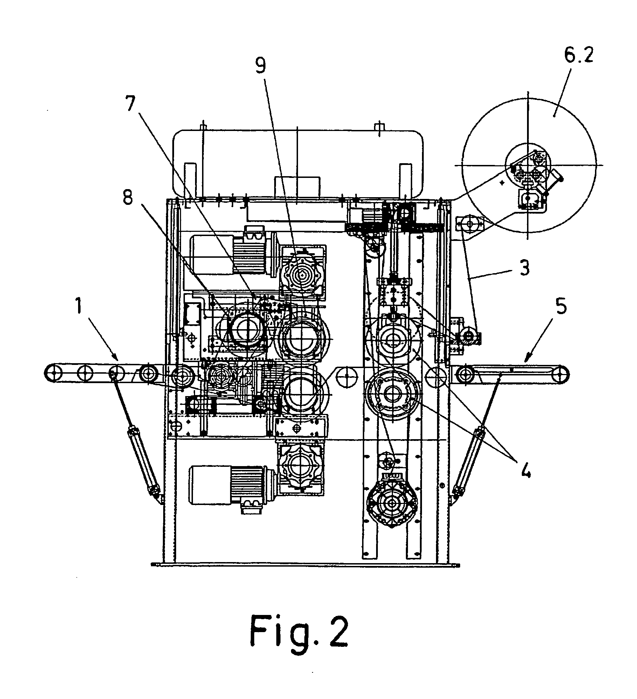

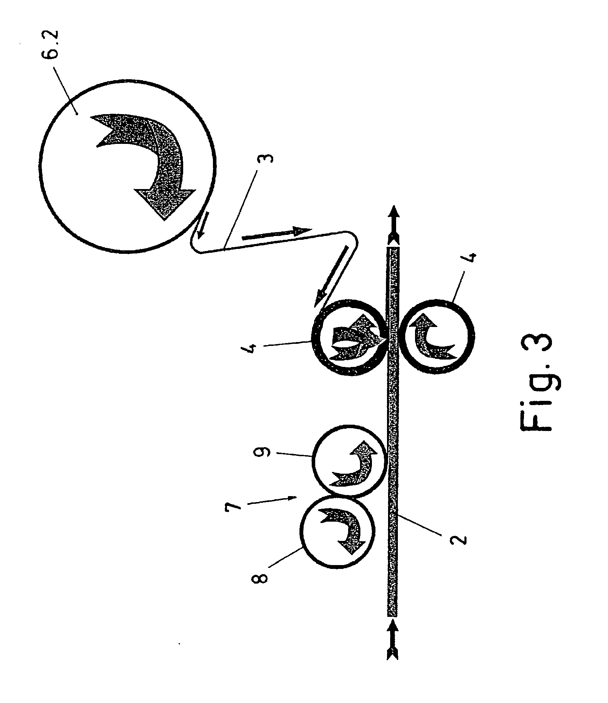

With said arrangement, the machine allows applying coatings with different systems for applying the fixing glue for fixing the coating sheet (3) on the panel (2) to be coated, for example according to the system of Figures 2 and 3, whereby by means of the head (7) with rollers one layer of glue is applied on the panel (2) to be coated, to later incorporate the coating sheet (3), coming from the unwinding device (6.2) placed at the rear part of the machine, on the glued panel (2), in the area of passage through the calendering rollers (4). In this case, the head (10) with a lip and the transfer roller (11) remain withdrawn in an inoperative position, without taking part in the process.

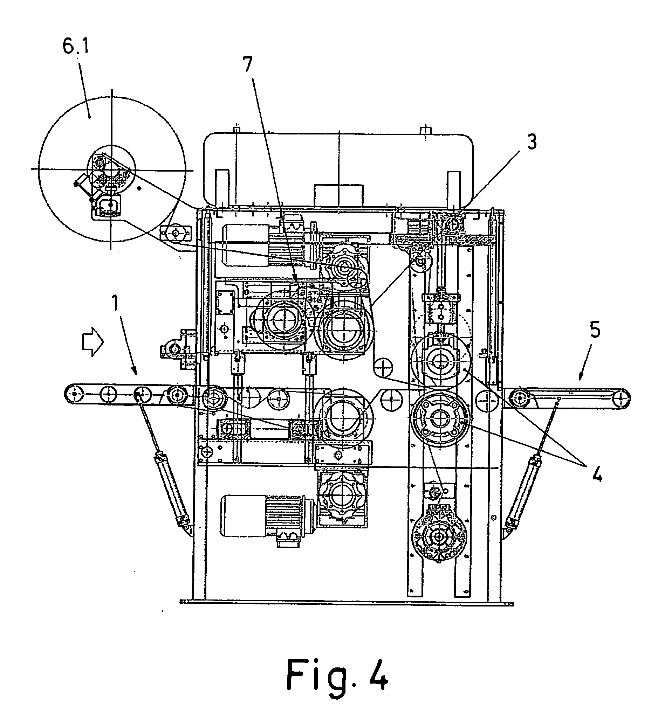

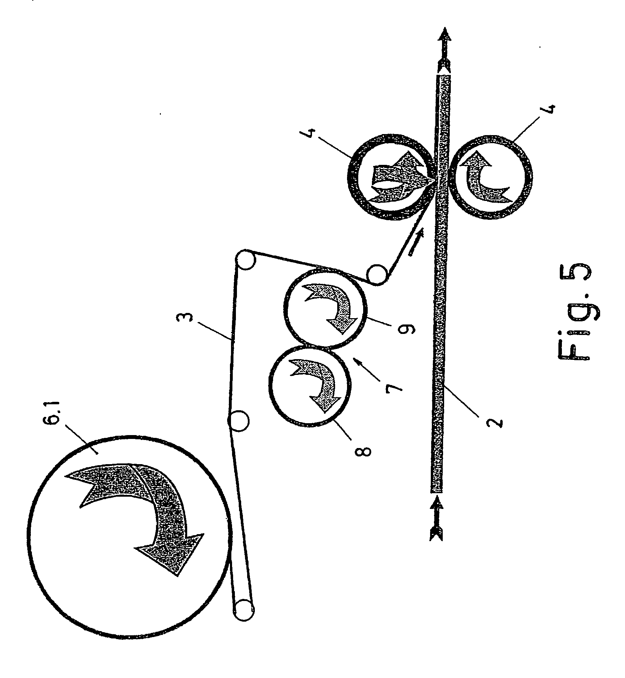

Another system which can be applied is as shown in Figures 4 and 5, whereby a layer of glue is applied on the coating sheet (3), coming in this case from the unwinding device (6.1) placed at the front part of the machine, to later incorporate the glued sheet (3) on the panel (2) to be coated in the area of passage through the calendering rollers (4). In this case, the head (10) with a lip and the transfer roller (11) also remain withdrawn in an inoperative position, without taking part in the process.

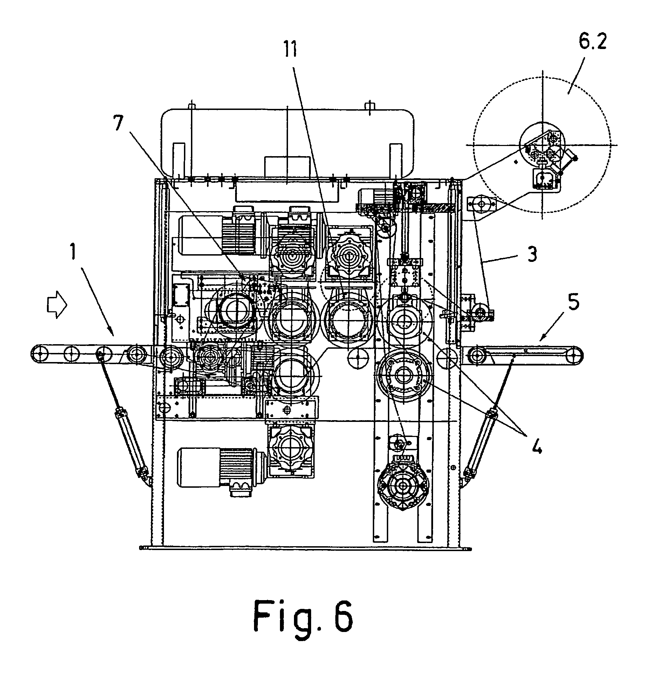

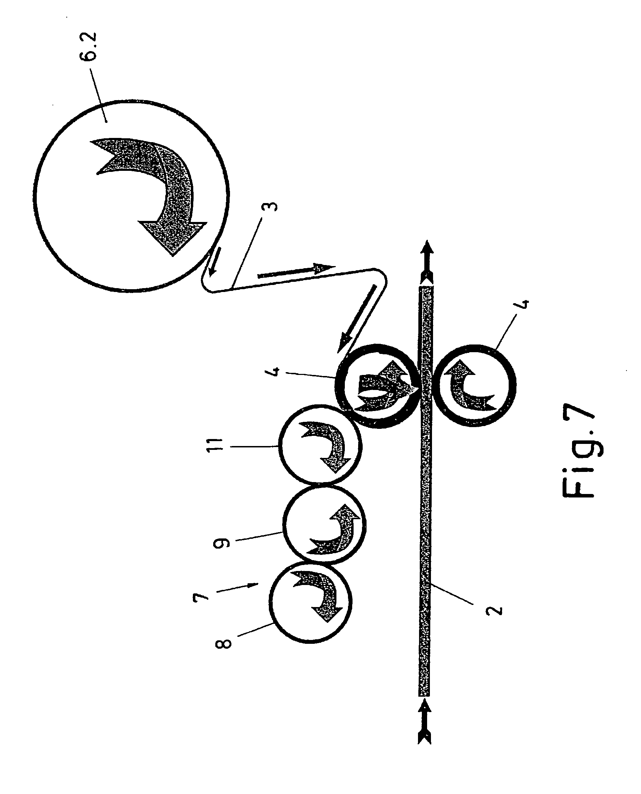

Another system for applying the gluing is as shown in Figures 6 and 7, whereby a layer of glue is applied on the coating sheet (3), coming from the unwinding device (6.2) placed at the rear part of the machine, the glue being applied through the transfer roller (11), which in this case is positioned between the head (7) with rollers and the sheet (3), in contact with the applicator roller (9), from which the glue is transferred to the sheet (3), to later incorporate the glued sheet (3) on the panel (2) to be coated in the area of passage through the calendering rollers (4). In this case, the head (10) with a lip likewise remains withdrawn in an inoperative position, without taking part in the process.

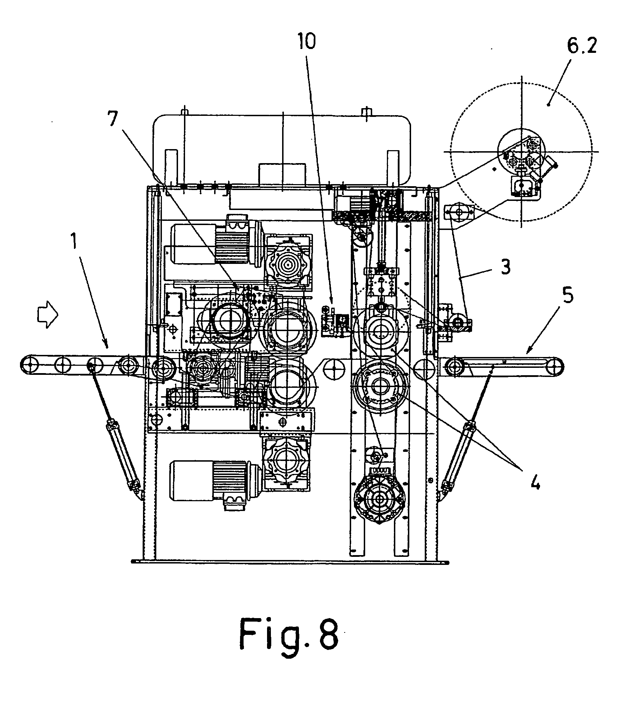

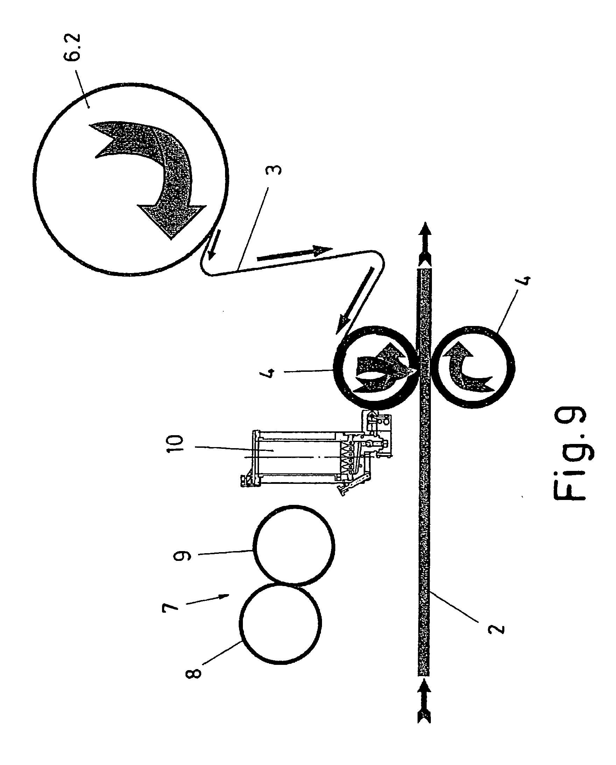

Another system for applying the gluing is as shown in Figures 8 and 9, whereby by means of the head (10) with a lip a layer of glue is applied on the coating sheet (3), coming from the unwinding device (6.2) placed at the rear part of the machine, to later incorporate the glued sheet (3) on the panel (2) to be coated in the area of passage through the calendering rollers (4). In this case, the head (7) with rollers and the transfer roller (11) remain withdrawn in an inoperative position, without taking part in the process.

The machine is therefore versatile for applying coatings with different system for applying glue intended for fixing the coating, depending on the type of panel (2) to be coated and on the sheet (3) which is used for the coating, which allows optimizing the coatings with all the application materials by means of the same machine, without having to use different process lines for each case.

## Claims

1. A machine for applying panel coatings, of the type of those incorporating a coating sheet (3) on the panels (2) to be coated, applying a gluing for fixing both elements to one another, **characterized in that** between a feeding inlet for the panels (2) to be coated and a discharge outlet for the coated panels it includes an assembly for applying the glue intended to fix the coating, said assembly for applying the glue comprising an applicator head (7) with rollers, an applicator head (10) with a lip and a transfer roller (11), which are incorporated in a mobile assembly, with the possibility of the individual movement of each of them between work and rest positions to apply in different ways the gluing for fixing the coating sheet (3) on the panels (2) to be coated, before passing through calendering rollers (4) preceding the discharge outlet, the sheet (3) intended for the coating being supplied from an unwinding device (6.1) placed at the front part of the machine or from an unwinding device (6.2) placed at the rear part.

2. The machine for applying panel coatings according to claim 1, **characterized in that** the head (7) with rollers can be positioned to apply the fixing glue for the coating on the panel (2) to be coated, the head (10) with a lip and the transfer roller (11) remaining withdrawn in an inoperative position.

3. The machine for applying panel coatings according to claim 1, **characterized in that** the head (7) with rollers can be positioned to apply the fixing glue for the coating directly on the coating sheet (3), the head (10) with a lip and the transfer roller (11) remaining withdrawn in an inoperative position.

4. The machine for applying panel coatings according to claim 1, **characterized in that** the transfer roller (11) can be positioned to apply the fixing glue for the coating by transfer from the head (7) with rollers to the coating sheet (3), the head (10) with a lip remaining withdrawn in an inoperative position.

5. The machine for applying panel coatings according to claim 1, **characterized in that** the head (10) with a lip can be positioned to apply the fixing glue for the coating on the coating sheet (3), the head (7) with rollers and the transfer roller (11) remaining withdrawn in an inoperative position.

## Patentansprüche

1. Maschine zum Aufbringen von Paneelenbeschichtungen des Typs, bei dem eine Beschichtungsfolie (3) auf den zu beschichtenden Paneelen (2) eingebunden und ein Klebstoff zum Befestigen beider Elemente aneinander aufgebracht wird, **dadurch gekennzeichnet, dass** sie zwischen einem Einlass für die zu beschichtenden Paneelen (2) und einem Auslass für die beschichteten Paneelen eine Baugruppe zum Aufbringen des Klebstoffs zum Befestigen der Beschichtung beinhaltet, wobei die genannte Baugruppe zum Aufbringen des Klebstoffs einen Applikatorkopf (7) mit Walzen, einen Applikatorkopf (10) mit einer Lippe und eine Transferwalze (11) umfasst, die in eine mobile Baugruppe eingebunden sind, mit der Möglichkeit, dass durch die individuelle Bewegung von jedem von diesen zwischen Arbeits- und Ruhepositionen der Klebstoff zum Befestigen der Beschichtungsfolie (3) auf den zu beschichtenden Paneelen (2) auf verschiedene Weise aufgebracht wird, bevor sie durch Kalanderwalzen (4) vor dem Auslass passieren, wobei die für die Beschichtung gedachte Folie (3) von einer am vorderen Teil der Maschine platzierten Abwickelvorrichtung (6.1) oder von einer am hinteren Teil platzierten Abwickelvorrichtung (6.2) zugeführt wird.

2. Maschine zum Aufbringen von Paneelenbeschichtungen nach Anspruch 1, **dadurch gekennzeichnet, dass** der Kopf (7) mit Walzen so positioniert werden kann, dass er den Befestigungsklebstoff für die Beschichtung auf dem zu beschichtenden Paneel (2) aufbringt, wobei der Kopf (10) mit einer Lippe und die Transferwalze (11) in einer Nichtbetriebsposition zurückgezogen bleiben.

3. Maschine zum Aufbringen von Paneelenbeschichtungen nach Anspruch 1, **dadurch gekennzeichnet, dass** der Kopf (7) mit Walzen so positioniert werden kann, dass der Befestigungsklebstoff für die Beschichtung direkt auf die Beschichtungsfolie (3) aufgebracht wird, wobei der Kopf (10) mit einer Lippe und die Transferwalze (11) in einer Nichtbetriebsposition zurückgezogen bleiben.

4. Maschine zum Aufbringen von Paneelenbeschichtungen nach Anspruch 1, **dadurch gekennzeichnet, dass** die Transferwalze (11) so positioniert werden kann, dass sie den Befestigungsklebstoff für die Beschichtung durch Transfer vom Kopf (7) mit Walzen auf die Beschichtungsfolie (3) aufbringt, wobei der Kopf (10) mit einer Lippe in einer Nichtbetriebsposition zurückgezogen bleibt.

5. Maschine zum Aufbringen von Paneelenbeschichtungen nach Anspruch 1, **dadurch gekennzeichnet, dass** der Kopf (10) mit einer Lippe so positioniert werden kann, dass er den Befestigungsklebstoff für die Beschichtung auf die Beschichtungsfolie (3) aufbringt, wobei der Kopf (7) mit Walzen und die Transferwalze (11) in einer Nichtbetriebsposition zurückgezogen bleiben.

## Revendications

1. Machine pour appliquer des revêtements sur des panneaux, du type de ceux incorporant une feuille de revêtement (3) sur les panneaux (2) devant être revêtus, appliquant un encollage pour fixer les deux éléments l'un à l'autre, **caractérisée en ce que** qu'entre un orifice d'alimentation pour les panneaux (2) devant être revêtus et un orifice de décharge pour les panneaux revêtus, elle comporte un ensemble pour appliquer la colle destinée à fixer le revêtement, ledit ensemble pour appliquer la colle comportant une tête d'application (7) avec des rouleaux, une tête d'application (10) avec une lèvre et un rouleau de transfert (11), qui sont incorporés à un ensemble mobile, alors qu'il est possible que le mouvement individuel de chacun des postes entre une position de travail et une position de repos permette d'appliquer l'encollage de différentes manières afin de fixer la feuille de revêtement (3) sur les panneaux (2) devant être revêtus, avant de passer à travers des rouleaux de calandrage (4) lesquels précèdent l'orifice de décharge, la feuille (3) destinée au revêtement étant fournie à partir d'un dispositif de déroulement (6.1) placé au niveau de la partie frontale de la machine ou à partir d'un dispositif de déroulement (6.2) placé au niveau de la partie arrière.

2. Machine pour appliquer des revêtements sur des panneaux, selon la revendication 1, **caractérisée en ce que** la tête (7) munie de rouleaux peut être positionnée de façon à appliquer la colle de fixation pour le revêtement sur le panneau (2) devant être revêtu, alors que la tête (10) avec une lèvre et le rouleau de transfert (11) restent rétractés dans une position non opérationnelle.

3. Machine pour appliquer des revêtements sur des panneaux, selon la revendication 1, **caractérisée en ce que** la tête (7) munie de rouleaux peut être positionnée de façon à appliquer la colle de fixation pour le revêtement directement sur la feuille de revêtement (3), alors que la tête (10) avec une lèvre et le rouleau de transfert (11) restent rétractés dans une position non opérationnelle.

4. Machine pour appliquer des revêtements sur des panneaux, selon la revendication 1, **caractérisée en ce que** le rouleau de transfert (11) peut être positionné de façon à appliquer la colle de fixation pour le revêtement grâce au transfert à partir de la tête (7) munie de rouleaux sur la feuille de revêtement (3), alors que la tête (10) avec une lèvre reste rétractée dans une position non opérationnelle.

5. Machine pour appliquer des revêtements sur des panneaux, selon la revendication 1, **caractérisée en ce que** la tête (10) munie d'une lèvre peut être positionnée de façon à appliquer la colle de fixation pour le revêtement sur la feuille de revêtement (3), alors que la tête (7) avec des rouleaux et le rouleau de transfert (11) restent rétractés dans une position non opérationnelle.
